**Europäisches Patentamt**

**European Patent Office**

**Office européen des brevets**

(19)

(11) Numéro de publication : **0 091 380**
**B1**

(12)

# FASCICULE DE BREVET EUROPÉEN

(45) Date de publication du fascicule du brevet :
06.07.88

(51) Int. Cl.⁴ : **F 23 C 3/00**, C 03 B 37/04,
C 03 B 37/06

(21) Numéro de dépôt : 83400697.5

(22) Date de dépôt : 06.04.83

(54) Perfectionnements aux brûleurs à combustion interne.

(30) Priorité : 06.04.82 FR 8205919

(43) Date de publication de la demande :
12.10.83 Bulletin 83/41

(45) Mention de la délivrance du brevet :
06.07.88 Bulletin 88/27

(84) Etats contractants désignés :
AT BE CH DE FR GB IT LI LU NL SE

(56) Documents cités :
CH-A- 449 862
DE-A- 3 026 008
FR-A- 1 310 159
FR-A- 2 374 440
US-A- 3 096 812
US-A- 3 372 012

(73) Titulaire : ISOVER SAINT-GOBAIN
Les Miroirs 18, avenue d'Alsace
F-92400 Courbevoie (FR)

(72) Inventeur : Gest, René
14 bis rue E. Vaillant
F-60290 Rantigny (FR)

(74) Mandataire : Le Vaguerese, Sylvain Jacques et al
SAINT-GOBAIN RECHERCHE 39, quai Lucien Lefranc
F-93304 Aubervilliers Cedex (FR)

## Description

L'invention concerne des perfectionnements aux brûleurs à combustion interne, produisant des courants gazeux à haute température et à grande vitesse. Plus particulièrement l'invention concerne les brûleurs du type de ceux utilisés dans les procédés de formation de fibres minérales et dans lesquels l'étirage des fibres résulte de l'action des courants gazeux émis par lesdits brûleurs seuls, ou en combinaison avec d'autres moyens tels que des moyens de centrifugation.

Les brûleurs dont il est question fonctionnent notamment avec des mélanges combustibles à faible vitesse de propagation de flamme. De façon traditionnelle, dans ce type de brûleur, un mélange de combustible et d'air est introduit à travers une grille à une extrémité d'une chambre de combustion où il est brûlé. Les produits de combustion sont évacués à l'autre extrémité de la chambre de combustion, à haute température et à grande vitesse.

Des brûleurs de ce type sont décrits notamment dans le FR-A-1 292 222 et son addition FR-E 90 660.

Les difficultés traditionnellement rencontrées avec ce type de brûleurs pour les mélanges combustibles à faible vitesse de propagation de flamme, tels que les mélanges d'air et de gaz naturel ou de butane ou de propane, résultent d'une certaine instabilité dans le fonctionnement. Il est difficile notamment de bien fixer la position de la flamme dans le brûleur même lorsque celui-ci est en régime. Les inconvénients sont encore plus sensibles lors de la mise en route des brûleurs. L'instabilité à certains régimes, indépendamment du bruit extrêmement important, peut même conduire jusqu'au soufflage de la flamme.

Les dispositions énoncées dans les brevets précités permettent dans une certaine mesure l'amélioration des conditions de fonctionnement de ce type de brûleur. Notamment la présence de barreaux à proximité de la grille favorise un meilleur brassage des gaz et une meilleure inflammation. Elle favorise surtout une meilleure localisation de la flamme et par suite une meilleure stabilité.

Malgré ces améliorations un certain nombre de difficultés subsistent. La mise en marche du brûleur reste une opération délicate et, de façon générale, les brûleurs en question se prêtent difficilement à des changements de régime de fonctionnement et/ou de combustible.

Par ailleurs, pour certaines utilisations, il est impérativement nécessaire de produire un courant gazeux très intense et très chaud à partir de brûleurs dont l'encombrement extérieur est limité. Ce type de contrainte apparaît en particulier dans les utilisations pour la production des fibres minérales. Ces deux exigences sont très difficiles à satisfaire simultanément avec les brûleurs traditionnels. Si l'on augmente la quantité de mélange combustible admis dans un brûleur de volume restreint, la flamme a tendance à décrocher de la grille et/ou une partie importante du mélange brûle à l'extérieur du brûleur sous forme d'une flamme molle inutilisable pour l'étirage des fibres.

L'utilisation des brûleurs dans les procédés d'étirage des fibres, quel que soit le procédé en question, requiert des conditions uniformes pour l'ensemble des gaz produits. Il est nécessaire en particulier, sous peine de recueillir des fibres dont les caractéristiques sont très variables, que la vitesse d'écoulement des gaz et leur température soit parfaitement uniforme à la fois dans le temps mais aussi dans toute l'étendue du courant formé. L'instabilité des flammes quelle qu'en soit la cause, conduirait à un flux gazeux inhomogène et à un étirage non uniforme.

L'invention a pour but de fournir un brûleur à combustion interne d'un nouveau type permettant de résoudre au moins en partie les problèmes soulevés par le fonctionnement des brûleurs traditionnels.

L'invention a pour but notamment de fournir un brûleur dans lequel la propagation de la flamme se fasse dans des conditions de meilleure stabilité quels que soient le régime choisi ou le combustible utilisé.

L'invention a également pour but de fournir un brûleur qui sous un encombrement réduit permette d'atteindre des conditions de fonctionnement et en particulier de charge thermique, c'est-à-dire de rapport du débit de gaz combustible au volume de la chambre, sensiblement améliorées par rapport à celles obtenues avec des brûleurs traditionnels (en maintenant complète la combustion).

Ces buts et d'autres avantages, dont il sera question dans la suite de la description, sont atteints grâce au brûleur selon l'invention dans lequel les conditions de combustion dans la chambre sont modifiées en changeant le mode de circulation des flux gazeux.

Selon une caractéristique de l'invention l'admission du mélange gazeux combustible et l'éjection des produits de combustion se situent dans la chambre de combustion sensiblement du même côté.

Suivant une autre caractéristique de l'invention, l'admission des gaz combustibles est faite à contre-courant de l'éjection des produits de combustion.

Suivant une autre caractéristique de l'invention, l'admission des gaz combustibles est faite de telle façon que ces gaz longent une première paroi de la chambre de combustion et refluent vers l'orifice de sortie en longeant une autre paroi de la chambre de combustion faisant sensiblement face à la première paroi.

Il est remarquable de constater que selon l'invention et contrairement aux dispositions antérieures on ne s'efforce pas selon l'invention de mieux stabiliser la flamme sur une grille du brûleur. De préférence, dans les brûleurs selon l'invention l'introduction du mélange gazeux dans la chambre de combustion ne se fait pas au travers d'une grille et cependant la stabilité de la flamme est sensiblement améliorée.

Les dispositions énoncées précédemment sont également remarquables en ce que dans une certaine mesure elles pouvaient paraître devoir conduire à des résultats contraires à ceux qui sont recherchés. L'obtention d'une vitesse élevée à la sortie du brûleur pouvait en effet paraître s'opposer à la disposition selon l'invention qui consiste à faire circuler le mélange entrant dans le brûleur à contre-courant du gaz émis. L'expérience montre, contre cette attente, que l'introduction du mélange combustible à contre-courant ne nuit pas à l'obtention de vitesses élevées bien au contraire.

Une des raisons des améliorations constatées dans l'utilisation des brûleurs selon l'invention semble résider dans la manière dont s'effectue l'inflammation.

Dans les systèmes traditionnels l'utilisation d'une grille ou, ce qui est équivalent, d'une paroi pourvue d'un grand nombre d'orifices de petites dimensions, trouve sa raison dans le fait qu'à chaque orifice se développent des turbulences très localisées. Ces turbulences créent autant de points où la vitesse des gaz décroît considérablement ou même s'annule. Dans ces courants « ralentis » la flamme peut se maintenir même si sa vitesse de progression est faible par rapport au flux gazeux pris dans son ensemble. En multipliant le nombre des orifices on multiplie les points d'inflammation potentiels dans le mélange combustible. Cependant pour des débits importants la grille ne suffit pas toujours et l'usage des obstacles supplémentaires, tels que les barreaux que nous avons indiqués précédemment, équivaut à compléter l'effet de la grille plus en aval à l'intérieur de la chambre.

L'inflammation du mélange combustible dans le brûleur selon l'invention s'effectue de façon différente. Plusieurs phénomènes contribuent à cette inflammation et en particulier le contact d'une part avec les gaz de combustion et d'autre part avec la paroi du brûleur.

L'écoulement à contre-courant des gaz de combustion et du mélange combustible fait que ce dernier dès son entrée dans la chambre de combustion est mis au contact et mélangé superficiellement avec des gaz à très haute température qui déclenchent son inflammation.

Le mélange combustible est également dirigé de façon à longer la paroi du brûleur proche de l'orifice d'introduction. Dans les dispositifs traditionnels, la température au voisinage de la grille n'est pas très élevée. Les zones les plus chaudes se situent vers la sortie du brûleur. Cette distribution des températures ne favorise pas l'inflammation à l'entrée de la chambre de combustion. Au contraire, selon l'invention, la paroi longée par les gaz entrants est portée à haute température principalement par le rayonnement émis par la paroi qui lui fait face et qui, elle, est au contact des gaz de combustion.

La température de la paroi longée par les gaz admis dans la chambre de combustion résulte d'un équilibre complexe. Les gaz admis, même s'ils sont préalablement réchauffés, sont à une température très inférieure à la température moyenne qui règne dans la chambre de combustion. Ils ont tendance à « refroidir » la paroi située au voisinage du point d'admission. Cet effet est analogue à celui que l'on observe dans l'art antérieur où les grilles des brûleurs restent à une température relativement basse bien qu'elles soient à l'intérieur de la chambre de combustion.

En disposant, selon l'invention, l'admission du mélange combustible le long d'une paroi faisant face à une autre paroi qui elle est longée par les gaz de combustion, un rayonnement intense s'établit de la seconde paroi vers la première qui se trouve ainsi portée à une température très élevée. Cette température est notamment beaucoup plus forte que celle que l'on observerait en l'absence de ce rayonnement et qui résulterait uniquement de la proximité des gaz enflammés.

Le fait d'introduire le mélange combustible sur une paroi très chaude favorise l'inflammation précoce du mélange.

Le fonctionnement du brûleur selon l'invention se caractérise donc notamment par des échanges thermiques accrus à l'intérieur de la chambre de combustion. Ces échanges thermiques importants sont une des causes de l'amélioration des performances constatées.

Nous venons de voir que le brûleur selon l'invention améliore la combustion en portant très rapidement le mélange combustible à température élevée. Le fait de ne pas « fixer » la flamme sur une grille présente aussi des avantages.

Dans les systèmes antérieurs lorsque pour une raison quelconque la flamme « décroche » de la grille les risques de battements et d'extinction sont importants du fait que les gaz non enflammés ne rencontrent plus immédiatement de points servant de « support » à la flamme.

Dans le mode de réalisation de l'invention, la localisation de la flamme sur le trajet des gaz ne se limite pas à un niveau déterminé, les points de « support » de la flamme ne sont pas situés particulièrement à l'orifice d'introduction, bien qu'à un degré moindre les bords de celui-ci peuvent jouer le rôle que joue chaque orifice de la grille dans les brûleurs antérieurs. Le rôle de support de la flamme est principalement rempli par une étendue variable de la paroi de la chambre longée par les gaz entrants.

Un avantage de l'utilisation de la paroi pour support de la flamme est, comme nous l'avons indiqué ci-dessus, que sa température est moins le résultat du contact avec les gaz qu'elle enflamme que celui de l'adsorption du rayonnement provenant de l'ensemble de la chambre (notamment des parois qui font face). Dans ces conditions, on comprend que cette température soit moins sensible à des variations instantanées de régime des gaz et que l'inflammation s'opère de façon plus régulière.

Un autre effet de l'utilisation de la paroi est d'accroître considérablement la zone d'inflammation potentielle utile. Ceci est avantageux en régime stable, la combustion complète des gaz en est facilitée. C'est encore plus avantageux lorsque le régime ou la composition sont modifiés. La zone d'accrochage s'établit d'elle-même dans la partie correspondante la plus propice de la chambre.

0 091 380

C'est aussi par cette disposition comme par l'établissement d'une circulation à contre-courant qu'il est possible d'accroître la charge thermique en maintenant un bon fonctionnement du brûleur.

Pour conduire à des résultats satisfaisants, la paroi longée par les gaz entrants est avantageusement constituée d'un matériau réfractaire présentant des aspérités. Il n'est cependant pas nécessaire que ces aspérités soient de grandes dimensions. Il suffit que les gaz entrants « s'accrochent » à leur contact, c'est-à-dire qu'il se forme une multiplicité de très petites turbulences le long de la surface de la paroi.

On trouve dans la littérature des exemples de brûleurs dans lesquels des parois réfractaires sont portées à haute température. Par exemple, dans le brevet FR-A-1 310 159 un brûleur utilisé pour chauffer un centrifugeur dans un dispositif de production de fibres minérales, comporte une chambre de combustion dont les parois chauffées par les flammes irradient par une large ouverture en direction du centrifugeur. Ce brûleur antérieur n'est cependant pas de nature à engendrer un courant gazeux à haute température et vitesse élevée nécessaire pour l'étirage de fibres minérales. Les difficultés énoncées précédemment à propos de la stabilité de la flamme pour les régimes élevés dans les brûleurs à combustion interne utilisés selon l'invention, ne se posaient donc pas pour les brûleurs de cet art antérieur utilisés comme simple moyen chauffant.

Les caractéristiques du brûleur selon l'invention, son mode de fonctionnement, ses utilisations préférées et les résultats atteints sont décrits de façon détaillée dans la suite de la description qui fait référence aux planches de dessins annexées. Dans celles-ci :

la figure 1 représente en coupe un brûleur à combustion interne de structure traditionnelle ;

la figure 2 représente en coupe un brûleur selon l'invention ;

la figure 3a est un autre mode de réalisation d'un brûleur selon l'invention analogue à celui de la figure 2 ;

la figure 3b montre à une échelle plus grande un détail de l'orifice d'alimentation du brûleur de la figure 3a ;

la figure 4 est une coupe transversale partielle suivant A-A d'un brûleur tel que représenté à la figure 3a ;

la figure 5 est un schéma en perspective d'un brûleur tel que représenté à la figure 3a, montrant la circulation du mélange gazeux combustible dans une double enveloppe ;

la figure 6 est une coupe d'une partie d'un brûleur selon l'invention, de forme annulaire ;

la figure 7 représente schématiquement en perspective une installation de formation de fibres utilisant un brûleur délivrant une nappe de gaz plane ;

la figure 8 représente une demi-coupe d'une autre installation de formation de fibres dans laquelle le brûleur utilisé est annulaire ;

la figure 9 est un diagramme indiquant les conditions à respecter pour obtenir un bon fonctionnement des brûleurs à combustion interne.

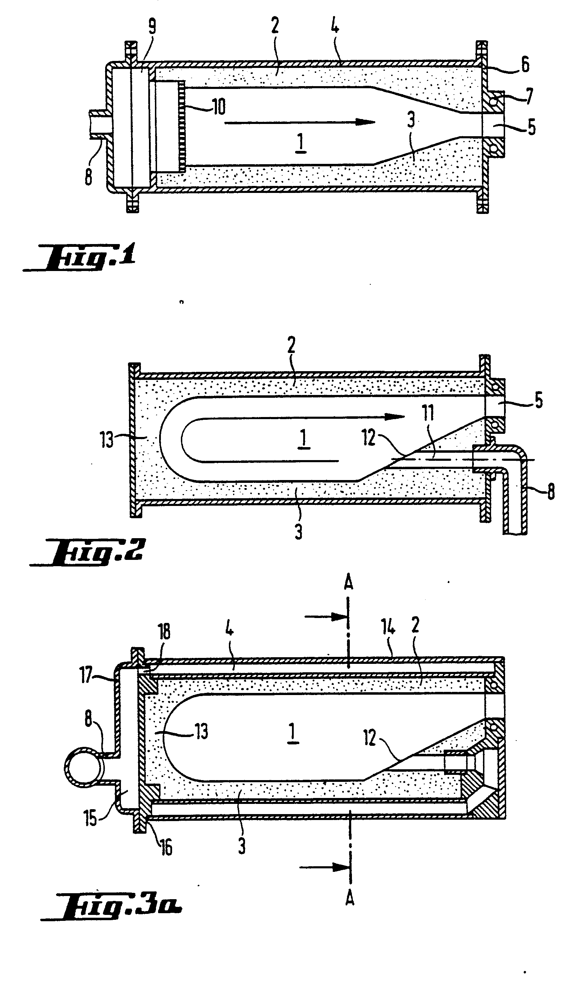

Le brûleur traditionnel représenté à la figure 1 comprend une chambre de combustion 1 délimitée par des parois réfractaires 2 et 3 formant le corps du brûleur. Les parois réfractaires 2 et 3 sont recouvertes et protégées sur leur face externe par une enveloppe métallique 4.

La chambre de combustion 1 présente à une extrémité une ouverture 5 par laquelle s'échappent les gaz de combustion. A cette extrémité les parois réfractaires sont couvertes par une bride métallique 6 qui constitue également les parois de l'ouverture 5. Un système de refroidissement 7 maintient la température de la bride à un niveau supportable pour le matériau constituant la bride.

Le mélange combustible est amené par la conduite 8 dans la chambre d'alimentation 9 et passe dans la chambre de combustion 1 en traversant la grille 10.

Dans les formes améliorées décrites dans les brevets antérieurs cités, des obstacles constitués par exemple par des barreaux de silice sont disposés à une faible distance en aval de la grille 10 sur le trajet du mélange gazeux. Ces barreaux ne sont pas représentés à la figure 1.

Dans ce dispositif comme on le comprend aisément la progression des gaz se fait de l'extrémité d'alimentation à celle présentant l'ouverture de détente des gaz de combustion. La disposition linéaire s'accompagne d'un minimum de turbulences. En fonctionnement stabilisé la flamme se fixe aux orifices de la grille 10, c'est-à-dire en un point de la chambre de combustion 1 où la température est relativement basse. En effet, elle n'est pratiquement pas au contact des gaz de combustion et le passage du mélange combustible assure un certain refroidissement. Par ailleurs, les points d'accrochage de la flamme sont directement sur le trajet qu'empruntent les gaz entrant dans la chambre, ce qui surtout pour des débits élevés ne favorise pas la stabilité.

Dans des variantes des brûleurs traditionnels, la chambre de combustion 1 peut présenter d'autres dispositions que celle de la figure 1. En particulier pour les brûleurs de forme annulaire utilisés dans les installations de fibrage comprenant un système centrifuge de distribution du matériau, les conditions d'encombrement peuvent conduire à utiliser une chambre formant un coude. Néanmoins, même dans ces variantes, l'alimentation se fait à une extrémité et l'émission des gaz de combustion à l'autre extrémité de la chambre de combustion, et globalement la progression des gaz se fait d'une extrémité vers l'autre, sans assurer la circulation à contre courant selon l'invention, ni le chauffage de la paroi longée par les gaz entrants.

Dans le mode de réalisation selon l'invention schématisé à la figure 2, la chambre de combustion 1 est close à l'une de ses extrémités. Le mélange combustible est amené par la conduite 8 située sur la

4

même face du brûleur que l'ouverture de détente 5.

La conduite 8, par laquelle le mélange combustible est amené, est prolongée par une canalisation 11 pratiquée dans la masse réfractaire. La canalisation 11 débouche dans la chambre de combustion 1 par un orifice 12.

Le mélange combustible passe librement de la canalisation 11 à la chambre 1. Il n'y a pas de grille servant de support de flamme. Tout au plus, par mesure de sécurité, une grille anti-retour de flamme non représentée peut être disposée à l'extrémité de la conduite 8. Mais les flammes ne se développent pas à son contact.

Le mélange gazeux est introduit dans la chambre suivant une trajectoire longeant la paroi réfractaire 3. Ce mouvement des gaz les éloigne de l'ouverture de détente 5. Ils sont maintenus le long de la paroi par la vitesse initiale du jet et par la pression qu'exercent les gaz de combustion circulant en direction de l'ouverture 5.

Pour faciliter la progression des gaz dans la chambre, la paroi réfractaire qui constitue l'extrémité close 13 est avantageusement incurvée. L'inversion du sens de progression des gaz dans la chambre est ainsi obtenue de façon régulière mais surtout la totalité du volume de la chambre est balayée par les gaz. On évite notamment la formation de zones pratiquement inactives dans lesquelles une certaine quantité de gaz se trouverait plus ou moins immobilisée.

A la figure 2, la section du fond 13 de la chambre a la forme d'un demi cercle, mais tout profil favorisant la circulation et le renversement du sens des gaz est avantageux.

Longeant la paroi 2, les gaz sont dirigés vers l'ouverture 5 dont la section de dimensions limitées contribue à l'accélération.

Dans ce type de brûleur, l'inflammation se produit dès l'orifice 12 de la canalisation 11 introduisant le mélange dans la chambre. Elle se développe également à proximité de cet orifice le long de la paroi 3. L'inflammation quasi instantanée du mélange dès sa pénétration dans la chambre de combustion, est favorisée par le contact avec les gaz de combustion se dirigeant vers l'ouverture 5 et par le contact avec la paroi 3 portée à haute température par suite de la combustion qui s'y développe et surtout par l'absorption du rayonnement émis par les autres parois de la chambre de combustion, notamment de la paroi qui lui fait face.

Pour fixer la flamme le long de la paroi à proximité de l'orifice 12, il est possible de modifier la surface de façon à ce que celle-ci présente à cet endroit des aspérités prononcées. Ces aspérités ou saillies plongeant dans le flux gazeux développent de petits tourbillons dans le sillage des gaz. Dans ces tourbillons la vitesse globale des gaz est très variable mais il s'y trouve des points de vitesse très faible qui favorisent la propagation de l'inflammation des gaz.

Les aspérités en question peuvent prendre des formes très variées. Il peut s'agir notamment de picots, de rayures, etc... Elles peuvent aussi ne couvrir que certains emplacements des parois de la chambre de combustion et notamment la partie proche des orifices 12, ou l'ensemble de ces parois.

Dans la pratique, les parois réfractaires formées par exemple par moulage d'un ciment réfractaire sont suffisamment rugueuses pour bien fixer la flamme et il n'est pas nécessaire de créer des aspérités supplémentaires.

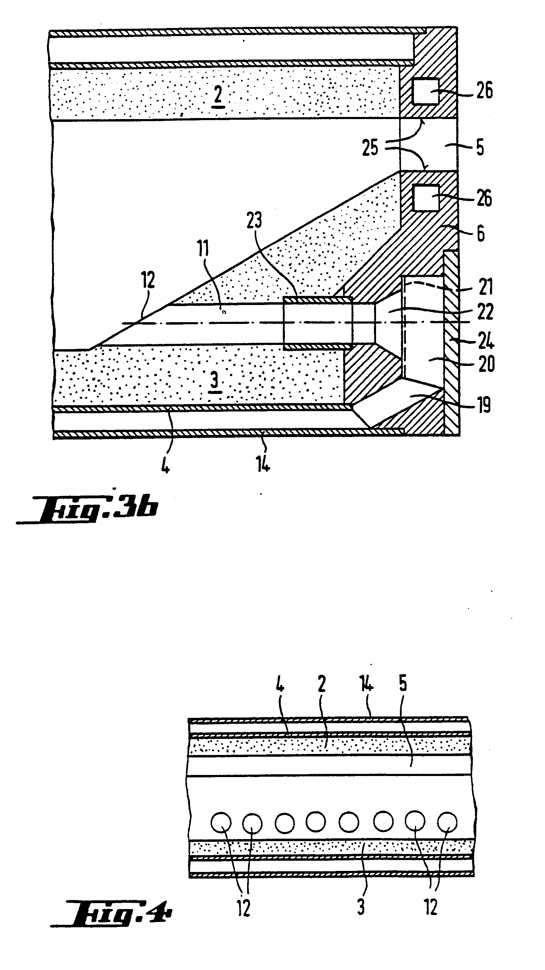

Aux figures 2 et 3, la paroi 2, longée par les gaz sortants est représentée plane. Pour accroître encore la température de cette paroi dans la partie qui fait face à la zone d'introduction du mélange combustible, il peut être avantageux de donner à cette paroi un profil qui favorise davantage son contact avec les gaz sortants. Il est possible notamment de faire en sorte que cette partie de la paroi s'avance légèrement vers l'intérieur de la chambre, ou encore corresponde à une section plus étroite pour le passage des gaz. Ce profil modifié ne doit pas, bien entendu, perturber de façon importante la circulation des gaz.

Le contact des gaz sortants avec la paroi étant mieux assuré et la température atteinte étant plus élevée, le rayonnement émis par cette paroi est également plus intense.

Les figures 3a et 3b présentent un autre mode de réalisation d'un brûleur selon l'invention. Ce brûleur se distingue de celui de la figure 2 essentiellement par la façon dont le mélange gazeux combustible est conduit jusqu'à la chambre 1.

Le corps du brûleur est recouvert d'une double enveloppe 4 et 14 dans laquelle le mélange combustible circule avant de pénétrer dans la chambre de combustion. La paroi 4 au contact du matériau réfractaire est à une température très supérieure à la température ambiante et le mélange combustible se trouve préchauffé, ce qui permet d'accroître encore les performances du brûleur.

Dans le mode représenté aux figures 3a et 3b, le mélange est amené à l'arrière du brûleur par la conduite 8. Il pénètre dans un compartiment 15 délimité par la bride 16 et le carter 17. De ce compartiment 15 les gaz passent dans la double enveloppe par des orifices 18.

Sur la figure 3a le mélange combustible est introduit à la partie supérieure de la double enveloppe. Il est conduit à la partie inférieure en longeant les côtés du brûleur, puis dans le compartiment d'alimentation détaillé à la figure 3b.

De la double enveloppe, le mélange passe par l'orifice 19 pratiqué dans la bride 6 dans le compartiment d'alimentation 20. Une grille 21 anti-retour de flamme est disposée sur l'orifice 22 de la bride conduisant au canal 11. Le centrage du canal 11 et de l'orifice 22 est assuré par une virole 23.

Le compartiment d'alimentation est clos sur la face avant du brûleur par une trappe 24. Cette trappe permet d'accéder à la grille 21. Il peut être nécessaire de changer la grille lorsque des crasses entraînées avec les gaz combustibles sont retenues. Pour éviter ce type de difficulté la grille anti-retour de flamme 21 peut être avantageusement remplacée par un diaphragme. Le réglage de ce dernier est fait de façon que la vitesse d'écoulement du mélange à ce niveau soit supérieure à celle de propagation de la flamme.

Les moyens de fixation (vis, boulon ...) des différents éléments du brûleur sont omis pour simplifier la lecture des figures.

Les bords de la bride 6 en contact avec les produits de combustion constituent les lèvres 25 du brûleur. Ces lèvres sont refroidies par passage d'un liquide réfrigérant dans les canalisations 26.

Les brûleurs dont il est question sont utilisés ordinairement pour produire un courant de gaz de combustion d'une certaine étendue dans le sens transversal. La structure d'ensemble du brûleur reste celle que nous avons décrite précédemment, et certains éléments sont reproduits à intervalles réguliers pour assurer un fonctionnement uniforme sur toute la largeur.

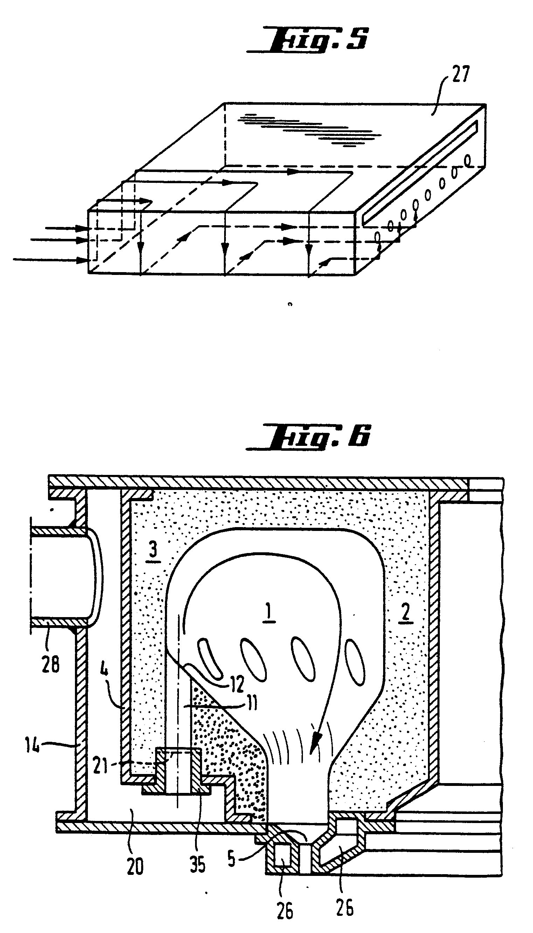

La figure 4 montre ainsi vu de l'intérieur une série d'orifices 12 alignés sur la face avant du brûleur. Les orifices 12 sont suffisamment proches les uns des autres pour qu'une fusion parfaite des flux s'établisse dans la chambre de combustion et que le courant émis par l'ouverture de détente 5 continue, soit uniforme en tout point.

De la même façon, pour que l'alimentation en mélange combustible soit identique pour tous les orifices 12, le compartiment d'alimentation 20 est avantageusement commun pour tous ces orifices.

Les dispositions précédentes ont pour but d'égaliser les débits de mélange combustible sur toute la largeur du brûleur. Il est important également qu'en tout point ce mélange pénètre dans la chambre dans des conditions de température identiques. Lorsque le mélange circule dans la double enveloppe, il est avantageux de contrôler son cheminement le long du corps du brûleur.

La figure 5 montre le principe de circulation de trois fractions de mélange combustible le long du brûleur schématisé en 27. Le trajet suivi par les fractions, représenté par les flèches, est sensiblement égal dans les trois cas. La température de ces trois fractions est par la suite pratiquement la même.

Pour faire en sorte que l'alimentation en gaz combustible suive le type de trajet représenté à la figure 3, des cloisons formant chicanes sont disposées à l'intérieur de la double enveloppe.

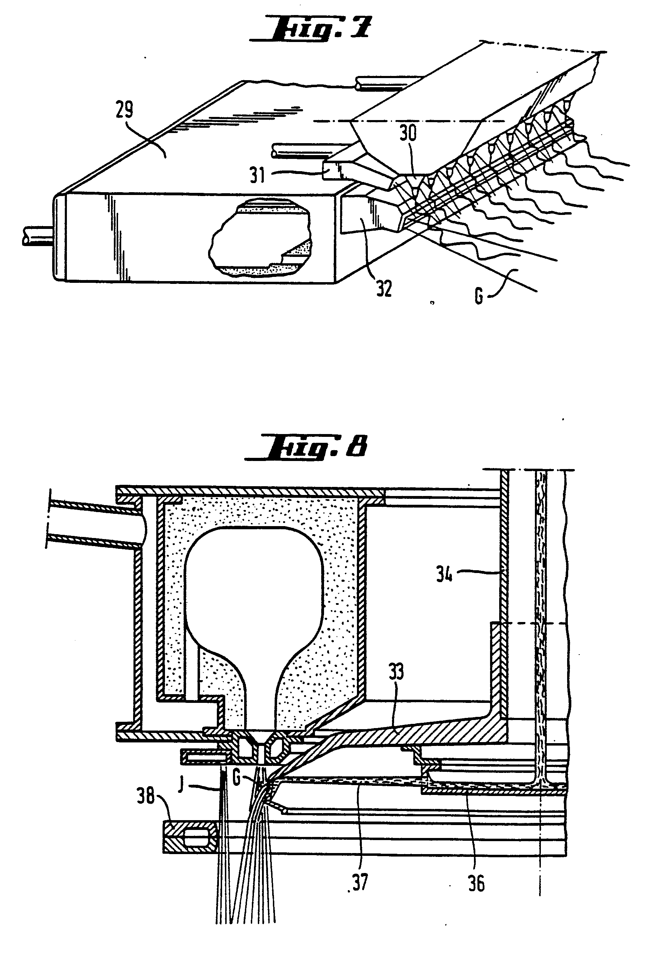

Aux figures 4 et 5, les brûleurs présentés sont destinés à produire un courant gazeux initialement plan. A la figure 6 le brûleur est du type de ceux utilisés pour la production de fibres dans les procédés comprenant un organe de centrifugation. Le courant gazeux produit dans ce cas doit longer uniformément la surface externe de l'organe de centrifugation. Pour cette raison, le brûleur de la figure 6 a une structure d'ensemble annulaire.

Indépendamment de la forme générale du brûleur sa section transversale fait apparaître des dispositions analogues à celles présentées précédemment. En particulier, l'admission du mélange combustible se fait par une canalisation 11 débouchant par un orifice 12 dans la chambre de combustion 1, et l'éjection des produits de combustion est effectuée par l'ouverture de détente 5 située du même côté de la chambre de combustion que l'orifice 12.

La forme de la chambre de combustion 1 est différente de celle des brûleurs précédents, mais le mode de fonctionnement reste sensiblement identique pour les raisons rappelées ci-dessous.

La direction initiale des gaz est inversée dans la chambre. Les gaz entrants circulent à contre-courant des gaz sortants. Sur la figure 6 la trajectoire d'ensemble des gaz dans la chambre est indiquée par une flèche.

L'inflammation des gaz n'est pas localisée sur une grille mais résulte du contact avec la paroi de la chambre portée à haute température par le rayonnement environnant notamment celui provenant de la paroi qui lui fait face.

Comme pour les brûleurs précédents, il est extrêmement important que le brûleur annulaire produise un courant de gaz de combustion uniforme tout autour de l'organe de centrifugation. A cet effet, les canalisations d'alimentation 11 sont disposées régulièrement et de façon suffisamment rapprochée. L'uniformité du débit dans ces canalisations 11 est obtenue par la présence du compartiment d'alimentation 20 annulaire unique qui égalise la pression.

A l'entrée de la canalisation 11, on peut disposer une grille 21 anti-retour de flamme.

Toujours à l'entrée de la canalisation 11, il est également possible de placer un anneau 35 formant diaphragme de telle sorte que la vitesse des gaz soit réglable en fonction du choix des dimensions de cet anneau.

Le préchauffage partiel des gaz au contact du brûleur est obtenu par un système de double enveloppe 4, 14. Le mélange combustible est amené par la conduite 28 et longe la paroi 4 du brûleur jusqu'au compartiment d'alimentation 20.

Le mélange gazeux pénétrant dans la chambre par l'orifice 12 longe la paroi 3 et ressort en longeant la paroi 2.

Le matériau de la paroi, ordinairement un ciment réfractaire, présente des petites aspérités favorables à « l'accrochage » de la flamme.

La formation de la chambre réfractaire, que celle-ci soit droite ou annulaire, est réalisée avantageusement par des techniques de moulage. La cavité correspondant à la chambre elle-même est obtenue en noyant une matrice qui est éliminée après séchage du ciment réfractaire. Cette matrice, par exemple en polystyrène expansé, est éliminée au moyen de solvants appropriés.

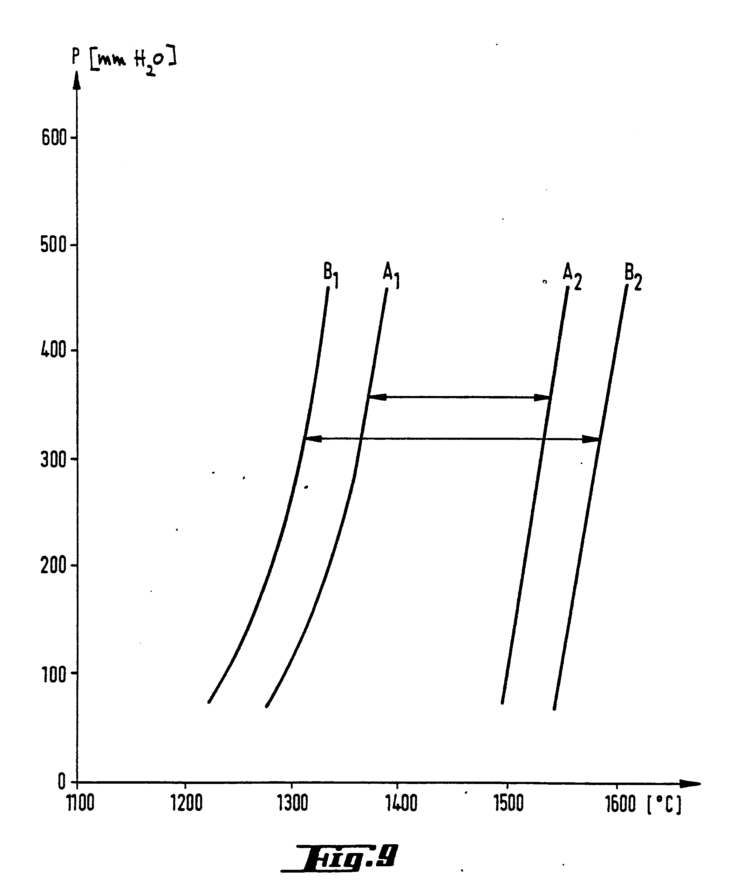

A plusieurs reprises, il a été question dans ce qui précède de l'utilisation des brûleurs selon l'invention dans les techniques de formation de fibres minérales. Les figures 7 et 8 montrent de façon schématique le mode d'utilisation de ces brûleurs pour deux types différents d'étirage de fibres.

La figure 7 se rapporte à l'étirage de filets de matériaux tels que le verre, le basalte, etc... au moyen d'un courant gazeux G émis par un brûleur 29. Des filets de matériau fondu sont distribués par une filière 30.

Des jets gazeux sont émis à partir d'une tuyère 31 pour chacun des filets de matériau fondu débités par la filière. Ces jets sont dirigés transversalement au courant gazeux G dans lequel ils pénètrent en formant chacun une zone d'interaction caractérisée par la présence de tourbillons réguliers qui favorisent l'introduction et l'étirage des filets de matériau.

Cette technique de formation de fibres a fait l'objet de plusieurs brevets français et notamment ceux publiés sous les numéros FR A 2 223 318, FR A 2 362 222 et FR A 2 374 440.

Un des avantages de ce mode d'étirage est qu'il est applicable à une grande variété de matériaux et en particulier à des matériaux dont la température au moment de l'étirage est relativement élevée, tels par exemple que le basalte, les verres « durs », ou encore les laitiers de fonderie. Pour étirer ces matériaux de façon satisfaisante il est avantageux, sinon nécessaire, de disposer d'un courant d'étirage à grande vitesse et à température élevée. Les brûleurs selon l'invention sont donc particulièrement appropriés d'autant que sur les lignes de production il est de coutume de disposer en série plusieurs ensembles tels que ceux de la figure 7 et que la place disponible étant limitée il est nécessaire d'utiliser des brûleurs de faible encombrement.

A la figure 7 le brûleur représenté est du type de celui de la figure 3a. Son ouverture de détente est prolongée par un nez 32 qui oriente le courant produit dans la direction souhaitée. Compte tenu des températures atteintes par les gaz à la sortie du brûleur, il est nécessaire de prévoir un système de refroidissement du nez 32.

D'autres procédés d'étirages de fibres requièrent la mise en œuvre de courants gazeux plans à haute température et grande vitesse. C'est le cas notamment des procédés d'étirage du type nommé « Aérocor ». Dans ces procédés le matériau à fibrer est mis d'abord sous forme de « filaments primaires solides » par refroidissement de filets débités par une filière. Ces filaments primaires sont plongés dans un courant de gaz de combustion émis par un brûleur. La température et la vitesse des gaz aboutissent simultanément au ramollissement et à l'étirage des filaments.

L'utilisation des brûleurs selon l'invention est également avantageuse pour ce type de procédé.

La figure 8 montre le mode d'utilisation d'un brûleur selon l'invention, de forme annulaire. Ce brûleur représenté en coupe partielle est disposé de façon que l'orifice de détente 5 qui forme une fente continue, émette le courant gazeux sur toute la périphérie d'un organe de centrifugation 33. Des dispositifs de fibrage de ce genre ont fait l'objet de nombreuses demandes de brevets. Pour le détail de l'appareillage et du fonctionnement, on peut se reporter notamment à la demande de brevet français n° 2 443 436.

Le fonctionnement de ce type de dispositif est le suivant : le matériau fondu est introduit par écoulement dans l'arbre creux 34, qui porte l'organe de centrifugation 33. Le matériau est reçu au fond d'un panier 36 concentrique à l'organe de centrifugation 33 et entraîné en rotation avec ce dernier. Le matériau se répand au fond du panier 36 et se dirige vers la paroi périphérique percée d'orifices. Projeté hors du panier sous forme de filets volumineux 37, le matériau vient s'accumuler sur la face interne de la paroi périphérique de l'organe de centrifugation 33. Sous l'effet de la force centrifuge, il passe par des orifices de petites dimensions percés sur cette paroi et se détache sous forme d'un grand nombre de filaments pour être projetés dans le courant gazeux G émis par le brûleur.

La température de l'organe de centrifugation qui constitue un des paramètres essentiels au bon fonctionnement de ce type de dispositif est contrôlé par le matériau, les gaz émis par le brûleur et par un système d'induction 38.

Un jet gazeux supplémentaire J permet d'éviter le contact des filaments produits et de l'anneau d'induction 38.

La combinaison de la projection centrifuge et de l'entraînement par les courants gazeux à haute température et vitesse élevée, aboutit à la production de fibres fines et régulières.

Dans ce type d'installation de fibrage, bien que les performances extrêmes en matière de température ou de vitesse soient importantes, la régularité des courants produits et la souplesse d'utilisation à des régimes variés des brûleurs selon l'invention constituent des avantages particulièrement utiles. L'encombrement réduit constitue aussi un avantage important.

Les applications qui viennent d'être indiquées ne sont bien entendu pas limitatives. En particulier dans le domaine de la formation des fibres minérales, les brûleurs selon l'invention sont applicables à une très grande variété de procédés dans lesquels il est fait usage d'un courant gazeux à grande vitesse et haute température.

Les caractéristiques de l'invention sont encore détaillées dans les exemples comparatifs suivants :

## Exemple 1

Les essais sont conduits sur un brûleur traditionnel tel que représenté à la figure 1 et sur un brûleur selon l'invention du type de celui représenté à la figure 3a.

Les deux chambres de combustion présentent le même volume, 18 dm$^3$, et la même section de sortie.

Avec le brûleur traditionnel une première constatation s'impose. Au cours de la montée en régime le brûleur passe par des phases de bruits intenses correspondant à une grande instabilité de la flamme. La conduite de ce brûleur est difficile et réclame une grande expérience de la part de l'opérateur.

Les tentatives sont faites au maximum de charge thermique pour faire varier les conditions de marche et notamment déterminer les conditions limites de fonctionnement usuelles.

Dans le cas du brûleur traditionnel, les relevés de pression dynamique et de températures des gaz à la sortie du brûleur sont effectués pour différents débits de gaz naturel de Groningue et d'air dans le mélange combustible admis dans le brûleur. Les résultats sont les suivants :

| Gaz Nm$^3$/h | 70 | 78 | 100 | 106 |
|---|---|---|---|---|
| Air Nm$^3$/h | 700 | 800 | 1200 | 1250 |
| Pression mbar | 120 | 130 | 136 | 170 |
| Température °C | 1500 | 1490 | 1380 | 1380 |

Il est intéressant de souligner que lorsque la charge thermique est accrue, la température des gaz émis a tendance à diminuer. Ceci peut s'expliquer par un temps de séjour moyen dans la chambre de combustion plus bref. L'obtention d'un courant gazeux très intense, c'est-à-dire avec un fort débit donc une grande vitesse, et présentant une température très élevée n'est pas possible.

Par ailleurs, si la charge thermique est réduite, on se heurte à une grande instabilité de fonctionnement qui se manifeste immédiatement par un bruit d'une violence insupportable. Le domaine de fonctionnement acceptable est relativement étroit.

Les relevés analogues effectués avec le brûleur selon l'invention donnent les résultats suivants :

| Gaz Nm$^3$/h | 68 | 78 | 90 | 98 | 116 |
|---|---|---|---|---|---|
| Air Nm$^3$/h | 800 | 800 | 900 | 800 | 1170 |
| Pression mbar | 90 | 95 | 176 | 108 | 190 |
| Température °C | 1330 | 1500 | 1580 | 1730 | 1600 |

Par rapport au brûleur traditionnel, l'évolution des températures en fonction du débit est sensiblement différente. On constate bien que au-delà d'un certain seuil la température a tendance à décroître comme précédemment, mais que le seuil en question correspond à des débits qui n'ont pu être atteints avec le brûleur traditionnel.

Ainsi, pour 78 Nm$^3$/h de gaz et 800 Nm$^3$/h d'air la température atteinte dans les deux cas est voisine de 1500 °C. Lorsque le débit de gaz est passé à environ 100 Nm$^3$/h avec le brûleur traditionnel, on est contraint de monter le débit d'air jusqu'aux environs de 1200 Nm$^3$/h pour que le fonctionnement devienne supportable. Au contraire, avec le brûleur selon l'invention on peut conserver un rapport gaz/air plus proche du rapport stœchiométrique et la température s'élève jusqu'à 1 730 °C pour un courant extrêmement intense.

Cette progression est intéressante par les possibilités nouvelles qu'elle procure. En effet, les températures de travail pour l'étirage des matériaux durs : basalte, laitiers... sont ordinairement supérieures à 1600 °C. Le brûleur traditionnel étudié ne serait donc pas utilisable dans les techniques de formation des fibres pour ce type de matériau.

Au contraire, les performances du brûleur selon l'invention permettent cette utilisation. De plus, on constate que ces conditions de températures peuvent être atteintes ou approchées en modifiant sensiblement les conditions d'alimentation de telle sorte que l'on opère aussi avec une pression et donc une vitesse des gaz à la sortie du brûleur accrues.

### Exemple 2

Pour bien montrer la différence de fonctionnement entre les deux types de brûleurs étudiés à l'exemple précédent des mesures de températures ont été faites.

Ces mesures sont localisées dans les zones où l'inflammation se développe, c'est-à-dire au voisinage de la grille pour le brûleur traditionnel et le long de la paroi longée par les gaz introduits pour le brûleur selon l'invention.

Dans tous les régimes indiqués précédemment les mesures faites à la surface de la grille du côté de la chambre de combustion n'ont pas dépassé le point éclair du gaz, 550 °C. Au contraire, la paroi de la chambre de combustion longée par les gaz pour le brûleur selon l'invention est très rapidement portée à une température de l'ordre de 1 400 °C après le démarrage. Elle présente même des pointes dont la température est d'environ 1 700 °C.

Cette température élevée résulte en grande partie du rayonnement provenant de la paroi faisant face et dont la température s'établit à plus de 1 700 °C.

Ces différences, comme nous l'avons indiqué, constituent certainement une des raisons des performances que permettent d'atteindre les brûleurs selon l'invention.

Exemple 3

Il a été indiqué précédemment qu'en dehors des avantages pour ce qui concerne les performances, il en existe d'autres qui sont de la plus grande importance pour l'utilisation des brûleurs selon l'invention.

En particulier indépendamment du niveau de puissance, les brûleurs à combustion interne sont limités à des conditions rigoureuses de fonctionnement en raison de phénomènes de résonance très violents qui peuvent se développer. Ces phénomènes sont extrêmement gênants au plan acoustique non seulement en raison de leur intensité mais aussi par la gamme de fréquence dans laquelle ils se manifestent.

On atteint ou on dépasse fréquemment 100 décibels à proximité du brûleur (environ 2 m sur le côté).

Ces phénomènes sont également néfastes par les détériorations qu'ils occasionnent dans le dispositif lui-même. Le revêtement réfractaire constituant les parois de la chambre de combustion est oridinairement très sensible aux vibrations intenses qui peuvent se produire pour un mauvais réglage. Il est donc de la plus grande importance de maintenir le fonctionnement du brûleur dans des conditions exemptes de ces phénomènes.

Des mesures effectuées pour les brûleurs traditionnels montrent que pour prévenir ces phénomènes, il faut se situer dans un domaine de condition relativement étroit.

La figure 9 représente sous forme d'un diagramme des limites typiques qu'il est nécessaire de respecter pour obtenir un fonctionnement acceptable d'un brûleur annulaire de type traditionnel.

La pression du gaz à l'intérieur de la chambre est portée en ordonnée en millimètres de colonne d'eau et la température des gaz sortants en abscisse.

Sur ce diagramme la courbe $A_1$ représente la limite inférieure au-delà de laquelle la flamme « décroche » de la grille, entraînant des battements qui peuvent entraîner l'extinction. La courbe $A_2$, pour le même brûleur, est la limite qu'il n'est pas possible de dépasser. Elle correspond au maximum que l'on peut atteindre compte tenu des conditions de résonance du dispositif. L'intensité sonore à cette limite est de l'ordre de 104 décibels. Au-delà de cette limite, si pour tenter d'accroître la température le rapport gaz/air était augmenté, la croissance sonore serait catastrophique. Le phénomène deviendrait quasi explosif comme cela a été indiqué à l'exemple 1.

On constate, d'après ce diagramme, que le réglage du brûleur doit être conduit avec la plus grande prudence.

Lorsque le régime de fonctionnement est bien établi, le maintien des conditions convenables est obtenu sans trop de difficultés. L'opération de démarrage du brûleur et de montée en régime est, par contre, extrêmement délicate et nécessite une grande expérience de la part de l'opérateur pour éviter de franchir les limites de fonctionnement acceptable.

Sur le même diagramme figurent les courbes $B_1$ et $B_2$ établies pour un brûleur selon l'invention tel que celui représenté aux figures 6 et 8. Les caractéristiques de ce brûleur, en dehors de sa configuration particulière, et notamment le volume de la chambre de combustion sont analogues à celles du brûleur traditionnel dont il a été question ci-dessus.

Le comportement d'ensemble est de même nature mais on constate que les limites inférieures et supérieures sont repoussées de sorte que le domaine de fonctionnement possible est accru de façon très sensible. Ceci est particulièrement avantageux lors de la mise en route du brûleur alors que les conditions ne sont pas parfaitement stabilisées. Ainsi, la montée en régime qui s'effectue traditionnellement par paliers peut être réalisée en un nombre de paliers relativement peu nombreux.

Il résulte de ce qui précède que les brûleurs selon l'invention sont d'une très grande souplesse d'utilisation lorsqu'ils sont comparés aux brûleurs traditionnels. De ce fait, ils sont aussi plus faciles à automatiser.

Au plan de l'acoustique, il faut aussi préciser que pour une même intensité sonore d'ensemble, les brûleurs traditionnels sont très désagréables pour les opérateurs. Les fréquences dominantes des brûleurs selon l'invention sont beaucoup plus basses que pour les brûleurs traditionnels, et sont plus facilement supportables.

En outre, pour une même charge thermique, les mesures acoustiques effectuées sur les brûleurs en régime, font apparaître une baisse sensible du niveau sonore d'ensemble que l'on peut évaluer à 10 à 15 %.

**Revendications**

1. Brûleur à combustion interne pour l'étirage de fibres de verre comprenant une chambre de combustion (1), une canalisation d'alimentation (11) en mélange combustible débouchant dans la chambre de combustion (1) par un ou plusieurs orifices d'alimentation (12) et un orifice de détente (5) de faible section par rapport à celle de la chambre de combustion (1) de telle sorte que les gaz soient émis à une vitesse et à une température suffisantes pour étirer des filets de verre fondu au contact desquels ces gaz de combustion sont conduits à la sortie de la chambre de combustion (1), caractérisé en ce que la configuration des orifices d'alimentation (12) conduit le mélange gazeux sous une faible épaisseur au contact d'une première paroi (3) en matériau réfractaire de la chambre de combustion (1) et le long de celle-ci en direction d'une extrémité close de ladite chambre de combustion, le sens d'écoulement du flux gazeux étant inversé à cette extrémité de la chambre (1) pour être renvoyé, le long d'une autre paroi (2) de la chambre, également en matériau réfractaire, faisant face à la première paroi (3), vers l'orifice de détente (5), cette paroi (3) au contact des gaz de combustion étant portée à haute température et rayonnant en direction de l'autre paroi (2) longée par le mélange combustible et élevant la température de cette dernière.

2. Brûleur à combustion interne selon la revendication 1, caractérisé en ce que la paroi (3) de la chambre de combustion voisine de l'orifice d'alimentation (12) en matériau réfractaire présente des aspérités favorisant son contact avec le mélange combustible.

3. Brûleur à combustion interne selon l'une quelconque des revendications précédentes, caractérisé en ce que la chambre de combustion (1) est formée dans une cavité d'un matériau réfractaire constituant le corps du brûleur, lequel est entouré d'une double enveloppe métallique (4, 14), le mélange combustible passant dans la double enveloppe pour être préchauffé avant son introduction dans la chambre de combustion.

4. Brûleur à combustion interne selon l'une quelconque des revendications précédentes produisant un courant de produits de combustion sous forme d'une nappe plane, caractérisé en ce que la chambre de combustion (1) s'étend de façon correspondante dans le sens de la largeur de la nappe, qu'une série d'orifices d'alimentation (12) identiques, alignés et proches les uns des autres, conduisent le mélange combustible dans la chambre de combustion (1) le long d'une paroi (3) de la chambre de combustion (1) les gaz de combustion circulant en sens inverse du mélange introduit et que l'orifice de détente (5) constitue une fente continue unique.

5. Brûleur à combustion interne selon la revendication 4, caractérisé en ce que la série d'orifices d'alimentation (12) est en communication avec un compartiment d'alimentation (20) unique par l'intermédiaire de canalisations (11).

6. Brûleur selon l'une quelconque des revendications 1 à 3 dans lequel le corps du brûleur est de forme annulaire, la chambre de combustion (1) unique étant également de forme annulaire et l'orifice de détente (5) étant constitué par une fente continue de forme circulaire, l'alimentation en mélange combustible étant réalisé par une série de canalisations (11) débouchant dans la chambre de combustion par des orifices (12) situés à intervalles réguliers et proches les uns des autres, sur une paroi de la chambre de combustion (1) faisant face à une deuxième paroi longée par les gaz de combustion se dirigeant vers l'orifice de détente, les canalisations (11) étant toutes en communication avec une chambre d'alimentation annulaire unique (20).

7. Brûleur à combustion interne selon l'une des revendications 5 ou 6, caractérisé en ce que la chambre d'alimentation (20) est séparée des canalisations (11) par des moyens anti-retour de flammes.

8. Installation pour la formation de fibres minérales comprenant un brûleur à combustion interne (29), selon l'une quelconque des revendications 1 à 5 produisant un courant gazeux (G) et pénétrant dans celui-ci en formant des zones d'interaction et une filière (30) délivrant un filet de matériau à étirer dans chaque zone d'interaction.

9. Installation pour la formation de fibres minérales comprenant un brûleur à combustion interne selon la revendication 6 produisant un courant gazeux annulaire à la périphérie d'un organe de centrifugation (33) percé de multiples orifices et des moyens d'alimentation en matériau étirable disposés de façon à délivrer ledit matériau à l'intérieur de l'organe de centrifugation (33) lequel entraîné en rotation rapide projette le matériau passant par les orifices, sous forme de filaments, dans le courant gazeux annulaire qui les étire et les entraîne.

## Claims

1. Internal combustion burner for drawing glass fibres comprising a combustion chamber (1), a pipe (11) for supplying a fuel mixture opening into the combustion chamber (1) through one or several supply orifices (12) and a relief orifice (5) of small section in relation to that of the combustion chamber (1) so that the gases are emitted at a speed and a temperature which is sufficient for drawing fine streams of molten glass which when they come into contact with them these combustion gases are run to the outlet of the combustion chamber (1), characterised in that the configuration of the supply orifices (12) leads the gas mixture with a small thickness in contact with a first wall (3) made of refractory material of the combustion chamber (1) and along this in the direction of a closed end of the said combustion chamber, whereby the direction of flow of the gas stream is reversed at this end of the chamber (1) to be returned along another wall (2) of the chamber also made of refractory material and which faces the first wall (3) towards the relief orifice (5) and whereby this wall (3) when it comes into contact with the combustion gases is raised to a high temperature and gives off radiation in the direction of the other wall (2) alongside which the fuel

# 0 091 380

mixture runs whilst raising the temperature of this wall.

2. Internal combustion burner according to claim 1, characterised in that the wall (3) of the combustion chamber adjoining the supply orifice (12) which is made of refractory material has rough areas which promote its contact with the fuel mixture.

3. Internal combustion burner according to any one of the preceding claims, characterised in that the combustion chamber (1) is formed in a cavity of a refractory material which constitutes the body of the burner which is surrounded by a double metal casing (4, 14) whereby the fuel mixture passes into the double casing so that it is pre-heated before being introduced into the combustion chamber.

4. Internal combustion burner according to any one of the preceding claims giving a flow of combustion products in the form of a plane layer, characterised in that the combustion chamber (1) extends in a corresponding manner in the direction of the width of the layer, in that a series of aligned and identical supply orifices (12) which are located near each other, lead the fuel mixture into the combustion chamber (1) along a wall (3) of the combustion chamber (1), whereby the combustion gases circulate in the reverse direction of the mixture which is introduced and in that the relief orifice (5) constitutes a single continuous slit.

5. Internal combustion burner according to claim 4, characterised in that the series of supply orifices (12) is connected to a single supply compartment (20) through pipes (11).

6. Burner according to any one of claims 1 to 3 in which the body of the burner is of annular shape, the single combustion chamber (1) is also of annular shape and the relief orifice (5) consists of a continuous slit of circular shape, whereby the fuel mixture is supplied through a series of pipes (11) opening into the combustion chamber through orifices (12) located at regular intervals near each other on a wall of the combustion chamber (1) facing a second wall along which the combustion gases travel towards the relief orifice and whereby the pipes (11) are all connected to a single annular supply chamber (20).

7. Internal combustion burner according to one of claims 5 or 6, characterised in that the supply chamber (20) is separated from the pipes (11) by means for preventing back firing of flames.

8. Installation for the formation of mineral fibres comprising an internal combustion burner (29) according to any one of claims 1 to 5 producing a stream of gas (G) and penetrating this by forming interaction zones and a die (30) supplying a thin stream of material to be drawn into each interaction zone.

9. Installation for forming mineral fibres comprising an internal combustion burner according to claim 6 producing an annular stream of gas at the periphery of a centrifuging unit (33) containing multiple orifices and means of supplying material which can be drawn arranged in such a way as to feed the said material to the inside of the centrifuging unit (33) which is driven whilst rotating rapidly and sprays the material passing through the orifices in the form of filaments to the annular stream of gas which draws them and carries them along.

**Patentansprüche**

1. Brenner mit innerer Verbrennung zum Ausziehen von Glasfasern mit einer Brennkammer (1), einem Zuführkanal (11) für Brenngemisch, welcher in die Brennkammer (1) durch eine oder mehrere Zufuhröffnungen (12) mündet, und mit einer Ausblasöffnung (5) von gegenüber der Brennkammer (1) geringerem Querschnitt dergestalt, daß die Gase mit einer Geschwindigkeit, und bei einer Temperatur ausgebracht werden, die ausreichend ist, um Gasschmelze-Primärfäden auszuziehen, wobei im Kontakt mit ihm die Brenngase zum Ausgang der Brennkammer (1) geführt werden, dadurch gekennzeichnet, daß die Konfiguration der Zufuhröffnungen (12) das Gasgemisch unter geringer Dicke in Kontakt mit einer ersten Seitenwand (3) der Brennkammer (1) aus feuerfestem Material und entlang dieser in Richtung eines Endabschnitts innerhalb dieser Brennkammer leitet, wobei die Strömungsrichtung des Gasflusses an dem Endabschnitt der Brennkammer (1) umgekehrt wird, um entlang einer ebenfalls aus feuerfestem Material bestehenden zweiten Seitenwand (2) der Brennkammer (1) zu der Ausblasöffnung (5) zurückgeschickt zu werden, die gegenüber der ersten Seitenwand (3) angeordnet ist, wobei diese Seitenwand (3) im Kontakt mit Brenngasen auf hohe Temperatur gebracht wird und in Richtung der anderen Seitenwand (2) strahlt, welche von dem Gasgemisch entlanggeströmt wird, und die Temperatur der letzteren anhebt.

2. Brenner mit innerer Verbrennung nach Anspruch 1, dadurch gekennzeichnet, daß die Seitenwand (3) der Brennkammer in der Nähe der Zufuhröffnung (12) aus feuerfestem Material Rauhigkeiten aufweist, die ihren Kontakt mit dem Brenngemisch fördern.

3. Brenner mit innerer Verbrennung nach einem der vorhergehenden Ansprüche, dadurch gekennzeichnet, daß die Brennkammer (1) in einem Hohlkörper aus feuerfestem Material gebildet ist, welche den Brennkörper bildet, wobei dieser mit einer doppelten metallischen Umhüllung (4, 14) umgeben ist, wobei das Brenngemisch durch die doppelte Umhüllung hindurchtritt, um vor seinem Eintritt in die Brennkammer vorgeheizt zu werden.

4. Brenner mit innerer Verbrennung nach einem der vorhergehenden Ansprüche, welcher eine Abgasströmung in Form einer ebenen Bahn erzeugt, dadurch gekennzeichnet, daß die Brennkammer (1) sich entsprechend in Richtung der Breite der Bahn erstreckt, daß eine Reihe von identischen

11

Zufuhröffnungen (12), welche fluchtend und aneinanderliegend angeordnet sind, das Brenngemisch in die Brennkammer (1) entlang einer Seitenwand (3) der Brennkammer (1) führen, wobei die Brenngase in Gegenrichtung der eingeführten Mischung zirkulieren, und daß die Ausblasöffnung (5) einen einzelnen durchgehenden Spalt bildet.

5. Brenner mit innerer Verbrennung nach Anspruch 4, dadurch gekennzeichnet, daß die Reihe der Zufuhröffnungen (12) über Kanäle (11) mit einer einzigen Vorlagekammer (20) in Verbindung steht.

6. Brenner nach einem der Ansprüche 1 bis 3, bei dem der Brennkörper ringförmig ausgebildet ist, die einzige Brennkammer (1) ebenfalls ringförmig ausgebildet ist und die Ausblasöffnung durch einen kontinuierlichen Spalt in Kreisform gebildet ist, wobei die Zufuhr des Brenngemisches durch eine Reihe von Kanälen (11) erzeugt wird, welche in die Brennkammer (1) mittels Öffnungen (12) münden, die in regelmäßigen Abständen und nahe zueinander an einer Seitenwand der Brennkammer (1) angeordnet sind, welche einer zweiten Seitenwand gegenüber angeordnet ist, die die Brenngase auf die Ausblasöffnung richtend von diesen entlanggeströmt wird, wobei die Kanäle (11) alle in Verbindung mit einer einzigen ringförmigen Vorlagekammer (20) stehen.

7. Brenner mit innerer Verbrennung nach einem der Ansprüche 5 oder 6, dadurch gekennzeichnet, daß die Vorlagekammer (20) von den Kanälen (11) durch Mittel zur Verhinderung des Flammenrückschlags getrennt ist.

8. Einrichtung zur Bildung von Mineralfasern mit einem Brenner mit innerer Verbrennung (29) nach einem der Ansprüche 1 bis 5, der einen Gasstrom (6) erzeugt und sich in diesen hineinerstreckt und dabei Wechselwirkungszonen bildet, und mit einer Ziehdüse (30), welche in jeder Wechselwirkungszone auszuziehende Primärfäden liefert.

9. Einrichtung zur Bildung von Mineralfasern mit einem Brenner mit innerer Verbrennung nach Anspruch 6, der einen ringförmigen Gasstrom am Außenumfang eines Schleuderorgans (33) erzeugt, der mit einer Vielzahl von Öffnungen durchsetzt ist, und mit Zufuhreinrichtungen von Ausziehmaterial, welche derart angeordnet sind, daß sie das Material im Inneren des Schleuderorgans (33), welches mit hoher Drehgeschwindigkeit das Material durch die Öffnungen in Form von Filamenten in den ringförmigen sie ausziehenden und fördernden Gasstrom schleudert.

_Fig.1_

_Fig.2_

_Fig.3a_

**Fig.3b**

**Fig.4**

*Fig. 5*

*Fig. 6*

# Fig. 7

# Fig. 8

Fig.9